Europäisches Patentamt

European Patent Office

Office européen des brevets

(19)

(11) **EP 0 735 962 B1**

(12) **EUROPÄISCHE PATENTSCHRIFT**

(45) Veröffentlichungstag und Bekanntmachung des Hinweises auf die Patenterteilung:
**27.08.1997 Patentblatt 1997/35**

(21) Anmeldenummer: **95905576.5**

(22) Anmeldetag: **22.12.1994**

(51) Int. Cl.$^6$: **B60T 13/14**

(86) Internationale Anmeldenummer:
**PCT/EP94/04279**

(87) Internationale Veröffentlichungsnummer:
**WO 95/18031 (06.07.1995 Gazette 1995/29)**

(54) **VENTILANORDNUNG FÜR DIE BREMSDRUCKSTEUERUNG BEI EINER HYDRAULISCHEN FREMDKRAFTBREMSANLAGE EINES STRASSENFAHRZEUGES**

VALVE ARRANGEMENT FOR CONTROLLING BRAKE PRESSURE IN THE HYDRAULIC POWER BRAKE SYSTEM OF A ROAD VEHICLE

SYSTEME DE SOUPAPES POUR LA REGULATION DE LA PRESSION DE FREINAGE DANS UN SYSTEME HYDRAULIQUE DE FREINAGE ACTIONNE PAR FORCE EXTERIEURE D'UN VEHICULE ROUTIER

(84) Benannte Vertragsstaaten:
**FR GB IT**

(30) Priorität: **24.12.1993 DE 4344580**

(43) Veröffentlichungstag der Anmeldung:
**09.10.1996 Patentblatt 1996/41**

(73) Patentinhaber: **MERCEDES-BENZ AG**
**70327 Stuttgart (DE)**

(72) Erfinder:
  • **GROLL, Emanuel**
    **D-70327 Stuttgart (DE)**
  • **WOLL, Peter**
    **D-76646 Bruchsal (DE)**

(74) Vertreter: **Wittner, Walter**
    **c/o Mercedes-Benz AG**
    **Patentstrategie C106**
    **70322 Stuttgart (DE)**

(56) Entgegenhaltungen:
  **EP-A- 0 249 030          GB-A- 2 204 926**
  **US-A- 3 764 183**

## Beschreibung

Die Erfindung betrifft eine Ventilanordnung für die Bremsdrucksteuerung bei einer hydraulischen Fremdkraftbremsanlage eines Straßenfahrzeuges, bei der durch Betätigung eines Bremsventils ein zu der Betätigungskraft proportionaler Druck in einer an einen Bremskreis des Fahrzeuges angeschlossenen Ausgangsdruckkammer aufbaubar ist, wobei dieser Druck zwischen dem hohen Ausgangsdruckniveau eines als Druckquelle vorgesehenen Druckspeichers und dem dem niedrigen Umgebungsdruck entsprechenden Druckniveau des Bremsflüssigkeitsvorratsbehälters der Bremsanlage variierbar ist, und mit den weiteren, im Oberbegriff des Patentanspruchs 1 genannten, gattungsbestimmenden Merkmalen.

Bei einer durch die DE-35 09 980 A1 bekannten Ventilanordnung dieser Art umfaßt das Bremsventil ein erstes, als 2/2-Wege-Ventil ausgebildetes, als Auslaßventil wirkendes Kugel-Sitzventil, das durch axiale Verschiebung eines Betätigungskolbens, an dem über eine Pedalweg-Simulationsfeder die über das Bremspedal aufgebrachte Betätigungskraft angreift aus seiner als Grundstellung eingenommenen Offen-Stellung, in der die Ausgangsdruckkammer mit einer mit dem Bremsflüssigkeits-Vorratsbehälter in ständig-kommunizierender Verbindung stehenden Entlastungskammer des Bremsventils verbunden ist, in seine Sperrstellung steuerbar ist, sowie ein zweites, als 2/2-Wege-Ventil ausgebildetes, als Druckeinlaßventil wirkendes Kugel-Sitz-Ventil, das, nachdem das erste Kugel-Sitz-Ventil in seine Sperrstellung gelangt ist, durch weitere axiale Verschiebung des Betätigungskolbens sowie eines Steuerkolbens aus seiner zuvor als Grundstellung eingenommenen Sperrstellung, in der eine ständig unter dem hohen Ausgangsdruck des Speichers stehende Eingangsdruckkammer des Bremsventils gegen die Ausgangsdruckkammer desselben abgesperrt ist, in seine diese beiden Ventilkammern miteinander verbindende Offen-Stellung gelangt und als Gleichgewichtsstellung, die durch Gleichheit der auf den Betätigungskolben wirkenden Betätigungskraft mit einer dieser entgegengesetzt gerichteten, aus der Druckbeaufschlagung einer dem Ausgangsdruck des Bremsventil ausgesetzten Kolben-Reaktionsfläche resultierenden Reaktionskraft bedingt ist, wieder seine Sperrstellung einnimmt.

Die Ventilkugel des als Einlaßventil fungierenden Kugel-Sitz-Ventils wird durch eine vorgespannte Ventilfeder, die nur eine relativ geringe "Schließ"-Kraft entfaltet, auf ihren Sitz gedrängt. Die mit dieser Schließkraft gleichsinnig gerichtete Kraft, die dadurch zustande kommt, daß die Kugel auf einer wirksamen Fläche, die der durch den Sitz berandeten Fläche entspricht, dein hohen Ausgangsdruck der Hilfsdruckquelle ausgesetzt ist, wobei diese Kraft wesentlich größer als die aus der Vorspannung der Ventilfeder resultierende Kraft ist, wird bei der bekannten Ventilanordnung dadurch kompensiert, daß ein Reaktionskolben vorgesehen ist, der mit einein schlanken Stößel an der der Ventilfeder gegenüber liegenden Seite der Ventilkugel abgestützt ist und mit seiner der Kugel abgewandten Stirnfläche, die gleich oder annähernd gleich der Sitzfläche des Kugel-Sitz-Ventils ist, die axial bewegliche Abgrenzung einer Reaktionskammer bildet, in der ebenfalls der hohe Ausgangsdruck der Hilfsdruckquelle wirksam ist, so daß die Ventilkugel im Ergebnis Druckausgeglichen angeordnet ist und zum Öffnen des Ventils lediglich die Schließkraft der Ventilfeder überwunden werden muß. Die zum Öffnen des Einlaßventils erforderliche axiale Verschiebung des Reaktionskolbens wird mittels einer Lenkeranordnung erzielt, die einen mit der Ventilkugel des Auslaßventils fest verbundenen Schubstab und einen mit diesem gelenkig verbundenen, am Ventilgehäuse schwenkbar gelagerten Mitnahmehebel umfaßt, der nach dem Schließen des Auslaßventils bei weiterer Verschiebung des Betätigungskolbens zunächst einen kleinen Leerweg ausführt, bevor er an einer Anschlagschulter des Reaktionskolbens zur Anlage kommt und diesen bei weiterer Verschiebung des Betätigungskolbens mitnimmt, wodurch nunmehr die Ventilkugel des Einlaßventils von ihrem Sitz abhebt.

Der in der Ausgangsdruckkammer des Bremsventils sich nunmehr aufbauende Druck, dem der Betätigungskolben, bei geschlossenem Auslaßventil, auf seiner gesamten Querschnittsfläche ausgesetzt ist, hat eine den Betätigungskolben gegen die an ihm angreifende Betätigungskraft zurückdrängende Kraft zur Folge, so daß der Betätigungskolben mehr und mehr wieder zurückgeschoben wird, mit der weiteren Folge, daß das Einlaßventil wieder schließt und sich eine Gleichgewichtsstellung ergibt, in der beide Kugel-Sitz-Ventile des Bremsventil geschlossen sind, wobei in dieser Gleichgewichtsstellung der in der Ausgangsdruckkammer herrschende, als Bremsdruck genutzte Druck zur Betätigungskraft proportional ist.

Bei der bekannten Ventilanordnung entfällt ab dem Moment, in dem die Ventilkugel des Einlaßventils durch die axiale Verschiebung des Reaktionskolbens von ihrem Sitz abgehoben wird, derjenige Anteil der zuvor die Kugel auf ihren Sitz drängenden Kraft, der aus dem Ausgangsdruck der Hilfsdruckquelle resultierte, so daß der Reaktionskolben, der auf seiner der Ventilkugel abgewandten Kolbenfläche dem Ausgangsdruck der Hilfsdruckquelle ausgesetzt bleibt, spontan in eine die Kugel weit von ihrem Sitz abhebende Position schnellt, bevor durch seine Auslenkung die Lenkeranordnung im Sinne eines Öffnens des Auslaßventils reagiert. Das Ergebnis ist ein ruckartiges Ansprechen der Fahrzeugbremsanlage mit hoher Druck-Anstiegsrate in der Ausgangsdruckkammer des Bremsventils, was nicht nur unkomforabel ist, sondern in Fällen, in denen das Fahrzeug auf glatter Fahrbahn gebremst werden muß, auch gefährlich sein kann. Es kommt hinzu, daß durch die zur Erzielung der erwünschten "Einschalt"-Hysterese vorgesehene Lenkeranordnung, durch die bei einer Bremsdruck-Aufbau-Betätigung des Bremsventils gewährleistet werden soll, daß das Einlaßventil erst öffnet, nachdem das Auslaßventil geschlossen hat, eine baulich komplizierte und herstellungstechnisch entsprechend aufwendige Gestaltung des bekannten Bremsventils bedingt ist.

Mit im wesentlichen denselben funktionellen Nachteilen behaftet ist auch das durch die DE-AS 1 175 096 bekannte Bremsventil, das zwar mit einfacherem Aufbau realisierbar, jedoch dadurch, daß die Ventilkugeln beider Sitzventile starr miteinander verbunden sind und daher beide Sitzventile zwangsläufig gleichzeitig ihre Funktionsstellungen wechseln, aus Sicherheitsgründen problematisch ist.

Durch die DE-30 01 654 A1 ist weiter ein zur Druckversorgung der Bremsanlage eines Anhängers ein am Zugfahrzeug vorgesehenes Bremsventil bekannt, das mittels einer trägen Masse, die als Folge einer Abbremsung des Zugfahrzeuges eine Auslenkung in Fahrtrichtung erfährt, betätigbar ist. Dieses Bremsventil ist als 5/3-Wege-Ventil ausgebildet, dessen Kolben in Fahrtrichtung hin- und herverschiebbar ist. Nur das Bremsventil ist als 5/3-Wege-Ventil mit federzentrierter Grundstellung die zwischen einer gedrosselten Bremsdruck-Aufbaustellung und einer gedrosselten Bremsdruck-Abbaustellung, die dem Teilbremsbereich zugeordnet sind sowie einer ungedrosselten Bremsdruck-Aufbaustellung und einer ebenfalls ungedrosselten Bremsdruck-Abbaustellung angeordnet ist, die dem Vollbremsbetrieb zugeordnet sind, wobei der jeweilige Bremsdruck (die Druckabbauseite des Bremsventils zurückgekoppelt ist, wodurch das Bremsventil als Proportionalventil wirkt. Auch dieses Bremsventil hat die Eigenschaft, daß es bei einer Bremsung mit hoher Verzögerung zu einem ungünstig raschen Bremsdruckanstieg in der Bremsanlage des Anhängers kommen kann, da dann die eine Drosselung vermittelnde Druckaufbaustellung des bekannten Bremsventils sehr schnell aufgehoben - "übersprungen" - wird.

Aufgabe der Erfindung ist es daher, eine zur Bremsdrucksteuerung bei einer hydraulischen Fremdkraft-Bremsanlage geeignete Ventilanordnung der eingangs genannten Art dahingehend zu verbessern, daß bei gleichwohl einfacherem Aufbau derselben eine bessere Dosierbarkeit des Bremsdruckes im Sinne einer weitgehenden Vermeidung von Drucksprüngen erzielt wird.

Diese Aufgabe wird erfindungsgemäß durch die im kennzeichnenden Teil des Patentanspruchs 1 genannten Merkmale gelöst.

Durch die hiernach vorgesehene Anordnung des Betätigungskolbens sowie der Ventilsitze der beiden Kugel-Sitzventile, Gestaltung und Dimensionierung des Stellkolbens, in Kombination damit, daß der durch Öffnungsbetätigung des zweiten, als Einlaßventil fungierenden Kugel-Sitz-Ventils freigebbare, vom Druckspeicher über die Eingangsdruckkammer, dieses Kugelsitzventil und die Ausgangsdruckkammer des Bremsventils sowie die Hauptbremsleitung des an die Ausgangsdruckkammer angeschlossenen Bremskreises zu den Radbremsen führende Druckmittel-Strömungspfad mit einer den Höchstbetrag der Bremsdruck-Anstiegsrate auf einen vorgegebenen Wert begrenzenden Drossel versehen ist, wird bei insgesamt einfachem Aufbau der Ventilanordnung zum einen die Bedingung erfüllt, daß bei einer Bremsdruck-Aufbau-Betätigung der Ventilanordnung deren Einlaßventil mit Sicherheit erst dann öffnet, nachdem das Auslaß-Ventil in seine Sperrstellung gelangt ist, mithin ein direktes Überströmen von Bremsflüssigkeit, die unter hohem Druck steht, zum Tank hin ausgeschlossen ist und andererseits bei gleichwohl feinfühliger Dosierbarkeit des Bremsdruckes erreicht, daß drastische Bremsdruck-Anstiege beim Öffnen des Einlaßventils vermieden werden, was sowohl dem Fahrkomfort als auch der Fahrsicherheit zugute kommt. Auch wenn bei der Öffnungsbetätigung des Einlaßventils ein durch den Speicher-Ausgangsdruck bedingter Anteil der Schließkraft des Ventils, der durch "kleinflächige" Dimensionierung des Sitzes dieses Kugel-Ventils niedrig gehalten werden kann, entfällt und dadurch der Steuerkolben einen relativ großen Anfangs-Hub ausführen kann, so wird dessen Wirkung durch die Drossel im Sinne einer bedarfsgerechten Begrenzung der Bremsdruck-Anstiegsrate gleichsam ausgeglichen. Durch die weitere Drossel, deren Drosselspalt durch einen rohrförmigen Abschnitt des Gehäuses und die Ventilkugel des zweiten Kugel-Sitzventils berandet ist, wird die vorteilhafte Wirkung erzielt, daß die Ventilkugel unmittelbar nach dem Abheben von ihrem Sitz und innerhalb eines nennenswerten Bereiches ihres Anfangshubes, das heißt bis zu Einstellungen, die mittleren Bremsdrücken entsprechen, durch die Stauwirkung der von der Eingangsdruckkammer über den Drosselspalt zum Ventilsitz und den Durchgangskanal des Einlaßventils in die Ausgangsdruckkammer strömenden Bremsflüssigkeit in Anlage mit dem Betätigungsstößel des Einlaßventils gedrängt wird und daher, solange sie noch innerhalb eines den Drosselspalt berandenden rohrförmigen Abschnitts des Ventilgehäuses angeordnet ist, einen Beitrag zu der am Bremspedal spürbaren Reaktionskraft vermittelt, wodurch insbesondere im Bereich niedriger Fahrzeugverzögerungen eine feinfühlige Dosierbarkeit des Bremsdruckes begünstigt wird. Durch eine Abstimmung dieser "Stau"-Drossel und der die Bremsdruck-Anstiegsrate begrenzenden Drossel aufeinander sind definiert verschiedene, einem erwünschten Ansprech-Verhalten der Bremsanlage entsprechende Betätigungskraft/Bremsdruck-Charakteristiken erzielbar, so daß die Ventilanordnung auch an Fahrzeuge sehr unterschiedlichen Typs und Gewichts angepaßt werden kann.

In Kombination mit der gemäß Anspruch 2 vorgesehenen hydraulisch-schaltungstechnischen Einfügung der den Höchstbetrag der Bremsdruck-Anstiegsrate begrenzenden Drossel in die Fahrzeug-Bremsanlage ist diese Drossel zweckmäßigerweise als Einstelldrossel ausgebildet, die eine Einstellung einer erwünschten Bremsdruck-Anstiegsrate ermöglicht.

Wenn diese Drossel solchermaßen als diskretes Funktionselement ausgebildet und gleichsam "außerhalb" des Bremsventils angeordnet ist, so ist es besonders vorteilhaft, wenn ein gemäß Anspruch 4 realisierter Bypass-Strömungspfad vorgesehen ist, über den ein rascher Bremsdruckabbau möglich ist.

Ein solcher, zu der Drossel paralleler hydraulischer Strömungspfad ist nicht erforderlich, wenn die Drossel in das Bremsventil integriert ist, wobei die Drossel gemäß den Merkmalen der Ansprüche 6 bis 8 in konstruktiv einfacher Weise realisiert sein kann.

Für die in das Bremsventil integrierte, weitere Drossel, deren Drosselspalt durch die Ventilkugel des zweiten Kugel-Sitz-Ventils berandet ist, sind durch die Merkmale der Ansprüche 9 und 10 zweckmäßige Maßnahmen der Auslegung ihres Öffnungshubes und der Gestaltung des ihren Drosselspalt berandenden Gehäuseteils angegeben.

Die Erzielung eines erwünschten Ansprech-Verhaltens einer Bremsanlage durch Vorgabe von Pedalweg-/Bremsdruck- bzw. Bremskraft-Kennlinien ist bei Bremsanlagen, die mit der erfindungsgemäßen Ventilanordnung realisiert sind, auch dadurch möglich, daß auf diese die Betätigungskraft in der durch die Merkmale des Anspruchs 11 angegebenen Weise übertragen wird, wobei durch die Merkmale des Anspruchs 12 ein vorteilhafter Bereich des Verhältnisses $C_B/C_R$ der Federrate $C_B$ einer zur Übertragung der vom Fahrer ausgehenden Betätigungskraft auf den Betätigungskolben der Ventilanordnung vorgesehenen Übertragungsfeder zu der Federrate $C_R$ einer als Wegsimulationsfeder ausgenutzten Reaktionsfeder angegeben ist, der zwischen 6 und 12, vorzugsweise bei 10 liegt. Die Ausnutzung derartig hoher Werte des Verhältnisses $C_B/C_R$ ist möglich, da die Kugel-Sitz-Ventile der Ventilanordnung mit sehr kleinen Querschnitten der von der Bremsflüssigkeit durchströmten Ventilkanäle realisierbar sind.

Bei der durch die Merkmale des Anspruchs 13 angegebenen Gestaltung der Ventilanordnung ergibt sich am Beginn einer Bremsung zunächst ein kleiner Leerweg des Pedals, was aus ergonomischen Gründen erwünscht ist, damit, wenn die Ventilanordnung tatsächlich betätigt wird, diese Betätigung schon gegen eine nennenswerte Rückstellkraft erfolgt.

Weitere Einzelheiten der Erfindung ergeben sich aus der nachfolgenden Beschreibung eines speziellen Ausführungsbeispiels anhand der Zeichnung. Es zeigen

Fig. 1 ein schematisch vereinfachtes Hydraulik-Schaltbild einer hydraulischen Fremdkraft-Bremsanlage mit einer erfindungsgemäßen Ventilanordnung für die Bremsdrucksteuerung;

Fig. 2 eine Längsschnitt-Darstellung eines im Rahmen der Bremsanlage gemäß Fig. 1 zur Bremsdruck-Steuerung vorgesehenen Bremsventils mit einem als Kugel-Sitz-Ventil ausgebildeten Einlaßventil und einem ebenfalls als Kugel-Sitzventil ausgebildeten Auslaßventil, im Schnitt längs der zentralen Achse des Bremsventils,

Fig. 3 das Einlaßventil des Bremsventils gemäß Fig. 2 und

Fig. 4 das Auslaßventil des Bremsventils gemäß Fig. 2, in einer der Darstellung der Fig. 2 entsprechenden, im Maßstab jedoch vergrößerten Schnittdarstellung.

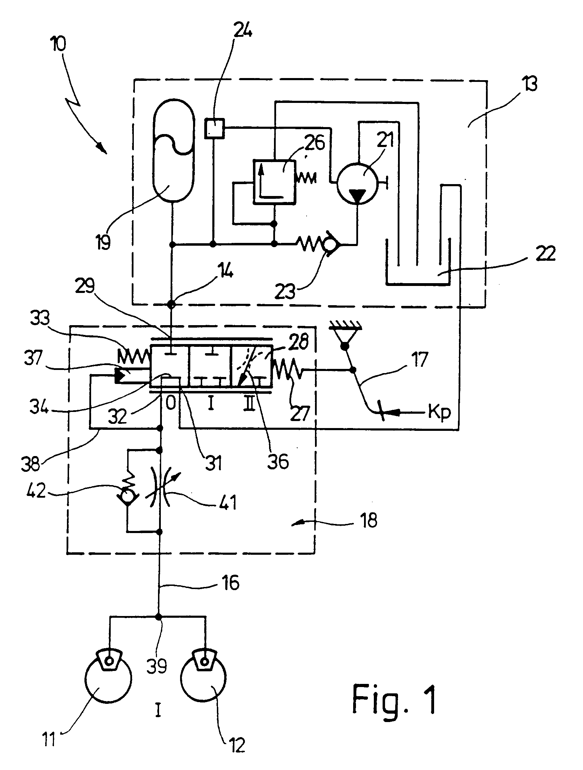

In der Fig. 1 ist eine insgesamt mit 10 bezeichnete hydraulische Fremdkraft-Bremsanlage für ein Straßenfahrzeug, die als Mehrkreis-, insbesondere Zweikreis-Bremsanlage vorausgesetzt sei, durch deren einem dieser Bremskreise, z.B. einem Vorderachs-Bremskreis I zugeordneten Komponenten repräsentiert, nämlich die Radbremsen 11 und 12 dieses Bremskreises I, ein Druckversorgungsaggregat 13 und eine zwischen den Druckausgang 14 und die Hauptbremsleitung 16 des Bremskreises I geschaltete, mittels des Bremspedals 17 der Bremsanlage 10 betätigbare Ventilanordnung 18, mittels derer ein vom Ausgangsdruck des Druckversorgungsaggregats 13 ableitbarer, zu der Kraft $K_p$, mit der der Fahrer das Bremspedal 17 betätigt, proportionaler Druck in die Radbremsen 11,12 des Bremskreises I einkoppelbar ist.

Das Druckversorgungsaggregat 13 ist auf einen als maximaler Bremsdruck nutzbaren, hohen Ausgangsdruck um 200 bar ausgelegt, der auf einem im wesentlichen konstanten Druckniveau am Druckausgang 14 bereitgestellt wird. Es besteht in üblicher Gestaltung aus einem Druckspeicher 19, einer elektrisch antreibbaren Hochdruckpumpe 21, mittels derer aus einem auf dem atmosphärischen Umgebungsdruck befindlichen Bremsflüssigkeits-Vorratsbehälter 22 Bremsflüssigkeit über ein als Rückschlagventil dargestelltes Speicher-Ladeventil 23 in den Druckspeicher zu dessen Aufladung förderbar ist, einem den Ladebetrieb der Hochdruckpumpe 21 steuernden Druckschalter 24, der die Pumpe 21 einschaltet, wenn der Ausgangsdruck des Speichers 19 unter einen Grenzwert von z.B. 180 bar abfällt und die Pumpe wieder ausschaltet, wenn der Speicher-wieder auf einen Druck von 220 bar aufgeladen ist, sowie einem Druckbegrenzungsventil 26, das zusätzliche Sicherheit gegen eine Aufladung des Druckspeichers 19 auf einen zu hohen Wert des Druckes vermittelt.

Die für die Bremsdruck-Steuerung vorgesehene Ventilanordnung 18 umfaßt ein mittels des Bremspedals 17 über einen als Druckfeder dargestellten Wegsimulator 27 betätigbares Bremsventil 28, mittels dessen ein zu der Kraft $K_R$ mit der der Fahrer das Bremspedal 17 betätigt, proportionaler Druck als Bremsdruck in die sich zu den Radbremsen 11,12 hin verzweigende Hauptbremsleitung 16 des Bremskreises I einkoppelbar ist, der zwischen dem atmosphärischen Umgebungsdruck bzw. dem im Vorratsbehälter 22 der Bremsanlage 10 herrschenden Druck als Minimalwert und dem Ausgangsdruck des Speichers 19 als Maximalwert stufenlos veränderbar ist.

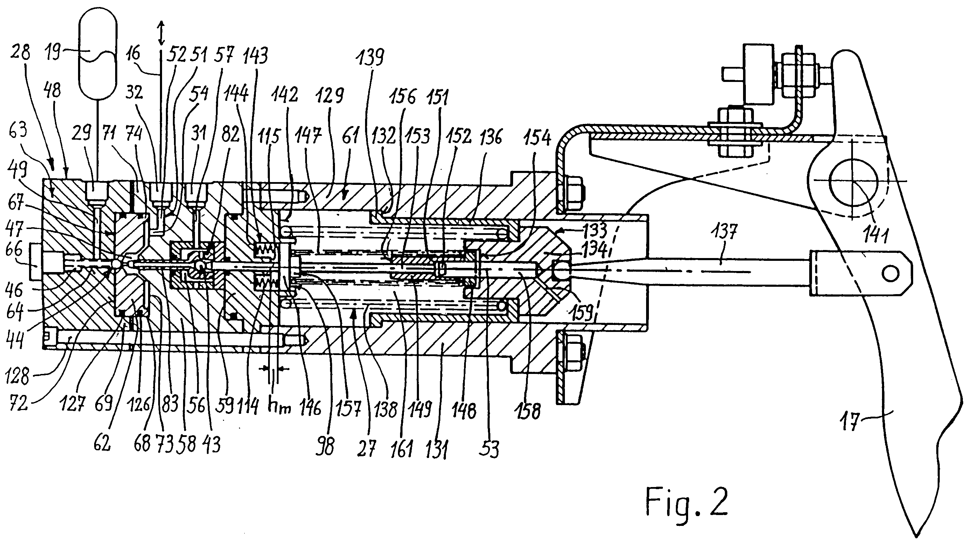

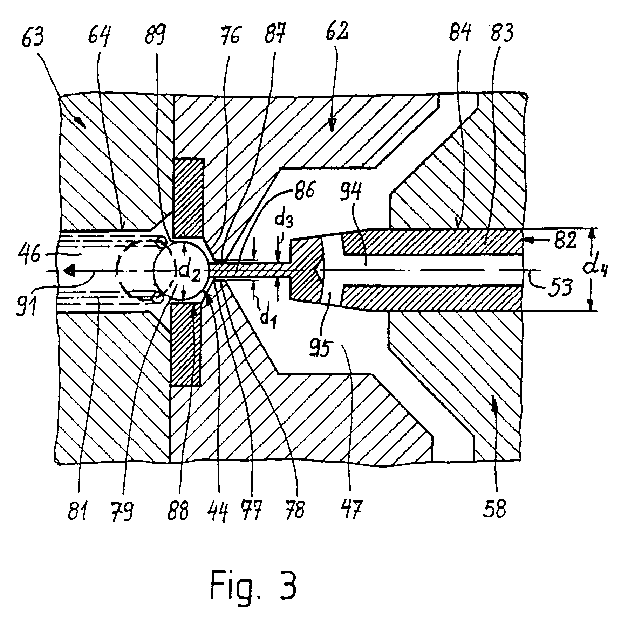

Das Bremsventil 28, zu dessen Erläuterung ergänzend auch auf die Fig. 2 und 3 verwiesen sei, hat einen mit dem Druckausgang 14 des Druckversorgungsaggregats 13 verbundenen Hochdruckanschluß 29, einen mit dem Bremsflüssigkeits-Vorratsbehälter 22 des Druckversorgungsaggregats 13 verbundenen Rücklaufanschluß 31 und einen Bremskreis-Anschluß 32, an dem, je nach Position des Bremspedals 17 ein mehr oder weniger hoher Bremsdruck bereitgestellt wird.

Das Bremsventil 28 ist als 3/3-Wegeventil ausgebildet, das im nicht betätigten Zustand der Bremsanlage 17 durch eine als Ventilfeder 33 dargestellte Rückstell-Federanordnung in seiner Grundstellung 0 gehalten ist, in welcher der Bremskreisanschluß 32 über einen Umlauf-Strömungspfad 34 des Bremsventils 28 mit dessen Rücklaufanschluß 31 und dadurch auch mit dem Bremsflüssigkeits-Vorratsbehälter 22 des Druckversorgungsaggregats 13 verbunden ist und der Hochdruckanschluß 29 gegen diese Anschlüsse 32,31 des Bremsventils abgesperrt ist. Durch eine Betätigung des Bremspedals 17 gelangt das Bremsventil 28 zunächst in eine Funktionsstellung I, eine Sperrstellung, in welcher sämtliche Ventilanschlüsse 29,31,32 gegeneinander abgesperrt sind. Durch weitere Betätigung des Bremsventils 28 gegen die zunehmende Rückstellkraft der Ventilfeder 33 gelangt dieses in eine Funktionsstellung II, in welcher über einen in dieser Funktionsstellung freigegebenen Steuerpfad 36 des Bremsventils 28 dessen Hochdruckanschluß 29 mit dem Bremskreisschluß 32 verbunden und diese sowie der Hochdruckanschluß 29 des Bremsventils 28 gegen dessen Rücklaufanschluß 31 abgesperrt sind.

Durch eine in der symbolischen Darstellung der Fig. 1 durch eine hydraulische Steuerkammer 37 des Bremsventils 28 und deren Verbindung mit dein Bremskreis-Anschluß 32 über eine Steuerleitung 38 repräsentierte Rückführung des am Bremskreisanschluß 32 des Bremsventils 28 sich aufbauenden Druckes auf das Bremsventil 28 wird eine mit diesem Druck anwachsende, mit der Rückstellkraft der Ventilfeder 33 gleichgerichtete, der Betätigungskraft $K_p$ entgegenwirkende Kraft erzeugt, die das Bremsventil 28 wieder in dessen Funktionsstellung I drängt, die das Bremsventil 28 als Gleichgewichtsstellung einnimmt, wenn bei einer Bremsung der dem Fahrerwunsch entsprechende Wert der Fahrzeugverzögerung erreicht ist und daher der Fahrer die Betätigungskraft $K_P$ mit der er das Bremspedal 17 "niederdrückt" - betätigt - konstant hält.

Will der Fahrer durch Zurücknahme des Bremspedals 17 den Bremsdruck auf einen einer geringeren Fahrzeugverzögerung entsprechenden Wert erniedrigen, so gelangt das Bremsventil so lange in eine der Grundstellung 0 entsprechende Konfiguration der freigegebenen und abgesperrten Strömungspfade, bis als Gleichgewichtsstellung, in der der Bremsdruck dem vom Fahrer gewünschten Wert der Fahrzeugverzögerung entspricht, wieder die Sperrstellung I des Bremsventils 28 erreicht ist. Bei "völliger" Zurücknahme des Bremspedals 17 bis in seine Grundstellung gelangt auch das Bremsventil 28 "sofort" in seine maximalem Öffnungsquerschnitt des Umlauf-Strömungspfades 34 entsprechende Grundstellung 0, die größter Bremsdruck-Abbau-Rate entspricht.

Desweiteren umfaßt die Ventilanordnung 18 eine zwischen den Bremskreisanschluß 32 des Bremsventils 28 und die Verzweigungsstelle 39 der Hauptbremsleitung 16 geschaltete Drossel 41 sowie ein zu dieser parallel geschaltetes Rückschlagventil 42, das durch relativ höheren Druck am Bremskreisanschiuß 32 des Bremsventils 28 als in der Hauptbremsleitung 16 in Sperrichtung und durch relativ höheren Druck in den Radbremsen 11,12 als am Bremskreisanschluß 32 des Bremsventils 28 in Öffnungsrichtung beaufschlagt ist.

Durch die Drossel 41 wird bei einer raschen Bremsdruck-Aufbaubetätigung des Bremsventils 28 eine Begrenzung der Bremsdruck-Aufbaurate in den Radbremsen 11,12 des Bremskreises I dahingehend erzielt, daß der Bremsdruck ab einer bestimmten Mindest-Betätigungskraft und damit auch einem Mindestpedalweg die/der aufgebracht/ausgeführt sein muß, bis das Bremsventil, bedingt durch Haftreibung von Dichtungselementen an relativ zueinander beweglichen Ventilelementen anspricht, nicht zu plötzlich ansteigt, sondern gut dosiert gesteigert werden kann, wie es sowohl für eine "sanfte" Zielbremsung, als auch für eine Vollbremsung, die gleichwohl gut kontrollierbar sein soll, am zweckmäßigsten ist, während durch das Rückschlagventil 42 erreicht wird, daß der Bremsdruck entsprechend der Pedalzurücknahme sehr schnell abgebaut wird und damit auch, dem Fahrerwunsch entsprechend rasch ein, abgesehen von einer durch den Schiebebetrieb des Fahrzeugmotors bedingten Fahrzeugverzögerung, im wesentlichen verzögerungsfreier Betriebszustand des Fahrzeugs wieder erreichbar ist.

Wenn, wie in der Fig. 1 in ausgezogenen Linien dargestellt, die Drossel 41 als ein "selbständiges - diskretes - Bauelement ausgebildet ist, das zwischen das Bremsventil 28 und die Verzweigungsstelle 39 der Hauptbremsleitung 16 in diese eingefügt ist, so ist diese Drossel 41 zweckmäßigerweise als Einstelldrossel ausgebildet, deren Strömungswiderstand einstellbar und dadurch im Sinne eines erwünschten Ansprechverhaltens der Bremsanlage 10 anpaßbar ist.

Die Drossel 41 kann, wie in der Fig. 1 gestrichelt eingezeichnet, auch in das Bremsventil 28 integriert und als Festdrossel ausgebildet sein. Ein dem Rückschlagventil 42 gemäß Fig. 1 entsprechendes Bypassventil ist dann nicht erforderlich.

Zur Erläuterung einer Gestaltung des Bremsventils 28, bei dem die Drossel 41 in dieses integriert ist, sei nunmehr auf die diesbezüglichen Einzelheiten der Fig. 2 Bezug genommen:

Das in der Fig. 2 in seiner Grundstellung 0 dargestellte Bremsventil 28 umfaßt ein erstes, insgesamt mit 43 bezeichnetes Kugel-Sitz-Ventil, das seiner Funktion nach ein 2/2-Wege-Ventil ist, welches in dieser Grundstellung den vom Bremskreisanschluß 32 des Bremsventils 28 zu dessen Rücklaufanschluß 31 führenden, in der Schalt-Symboldarstellung der Fig. 1 mit 34 bezeichneten Umlauf-Strömungspfad freigibt und somit innerhalb des Bremsventils 28 ein Auslaßventil bildet, über das die Druckentlastung der Radbremsen 11 und 12 erfolgt, die über die Hauptbremsleitung 16 des Bremskreises I an den Bremskreisanschluß 32 des Bremsventils 28 angeschlossen sind.

Das Bremsventil 28 umfaßt weiter ein zweites, insgesamt mit 44 bezeichnetes Kugel-Sitzventil, das ebenfalls die Funktion eines 2/2-Wegeventils vermittelt, das in seiner dem nicht betätigten Zustand der Bremsanlage entsprechenden, sperrenden Grundstellung eine über den Hochdruckanschluß 29 des Bremsventils 28 in ständig kommunizierender Verbindung stehende Eingangs-Druckkammer 46 des Bremsventils 28 gegen eine Ausgangs-Druckkammer 47 desselben absperrt, mit der der Bremskreis-Anschluß 32 des Bremsventils 28 in ständig kommunizierender Verbindung steht.

Dieses zweite Kugel-Sitzventil 44, das bei einer durch Betätigung des Bremsventils 28 gesteuerten Aktivierung der Bremsanlage 10 erst öffnet, nachdem zuvor das erste Kugel-Sitzventil 43 - durch die Betätigung des Bremsventils 28 - in seine Sperrstellung gelangt ist, bildet somit ein Einlaßventil, das in seiner Offenstellung den in der Symboldarstellung der Fig. 1 mit 36 bezeichneten Durchflußpfad freigibt, über den unter hohem Druck stehende Bremsflüssigkeit aus dem Druckspeicher 19 in die Ausgangsdruckkammer 47 des Bremsventils 28 überströmen kann.

Das die beiden Kugelsitzventile 43 und 44 sowie die zu deren Betätigung und Rückführung in die jeweiligen Grundstellungen vorgesehenen weiteren Funktionselemente des Bremsventils 28 aufzunehmende, insgesamt mit 48 bezeichnete Gehäuse des Bremsventils 28 ist, abgesehen von der "einseitigen" Anordnung des Hochdruckanschlusses 29 und eines diesen mit der Eingangsdruckkammer 46 des Bremsventils 28 verbindenden radialen Kanals 49, des Bremskreisanschlusses 32 und eines diesen mit der Ausgangsdruckkammer 47 verbindenden Kanals 51, der durch eine von dem Bremskreisanschluß 32 ausgehende radiale Stichbohrung 52 und eine mit dieser kommunizierende, von einem radial äußeren Bereich der Ausgangsdruckkammer 47 ausgehende, in radialem Abstand von der zentralen Längsachse 53 des Gehäuses 48 angeordnete axiale Stichbohrung 54 gebildet ist sowie des Rücklauf-Anschlusses 31 und eines diesen mit einer zentralen Entlastungskammer 56 kommunizierend verbindenden, radialen Entlastungskanals 57 axialsymmetrisch bezüglich der zentralen Längsachse 53 ausgebildet.

Das Ventilgehäuse 48 ist mehrteilig ausgeführt und umfaßt einen zentralen, die Entlastungskammer 56 aufnehmenden Block 58, an dem auch der Rücklaufanschluß 31, der diesen mit der Entlastungskammer 56 verbindende Entlastungskanal 57 sowie der Bremskreisanschluß 32 und der diesen mit der Ausgangsdruckkammer 47 verbindende Kanal 51 angeordnet sind.

Der zentrale Gehäuseblock 58 ist über ein erstes, massiv-blockförmig gestaltetes Zentrierstück 59 mit einem langgestreckten, dickwandig-rohrförmigen, pedalseitig angeordneten Gehäuseteil 61 in bezüglich der zentralen Längsachse des Bremsventils 28 exakt zentrierter Anordnung verbunden.

Mittels eines zweiten Zentrierstückes 62, das an der dem ersten Zentrierstück 59 gegenüberliegenden Stirnseite des zentralen Gehäuseblocks 58 angeordnet ist, ist dieser in bezüglich der zentralen Achse 53 des Bremsventils 28 exakt zentrierter Anordnung mit einem massiv gestalteten Gehäuse-Abschlußblock 63 verbunden, in welchem durch eine zentrale, sich in axialer Richtung erstreckende Bohrung 64, die durch einen Stopfen 66 druckdicht verschlossen ist, die Eingangsdruckkammer 46 begrenzt ist, welche über den radialen Kanal 49 mit dem Hochdruck-Anschluß 29 des Bremsventils 28 kommunizierend verbunden ist, an dem der Druckspeicher 19 an das Bremsventil 28 angeschlossen ist.

Das zweite Zentrierstück 62 ist seiner Grundform nach als dickwandige Kreisscheibe ausgebildet, die durch ihren formschlüssigen Eingriff mit an den einander gegenüberliegenden Stirnseiten des Gehäuseabschlußblocks 63 und des zentralen Gehäuseblocks 58 vorhandenen flachtopfförmigen Vertiefungen 67 bzw. 68 die in radialer Richtung durch je eine Ringrippe 69 bzw. 71 des Gehäuseabschlußblocks 63 bzw. des zentralen Gehäuseblocks 58 begrenzt sind, die Zentrierung bezüglich der zentralen Achse 53 des Bremsventilgehäuses 48 vermittelt.

Während sich das zweite Zentrierstück 62 an dem Gehäuseabschlußblock 63 großflächig an der den Boden seiner flach-topfförmigen Vertiefung 67 bildenden ebenen Ringstirnfläche 72 abstützt, ist es an der gegenüberliegenden ringförmigen Bodenfläche 73 der topfförmigen Vertiefung 68 des zentralen Gehäuseblocks 58 lediglich über eine schmale, in axialer Richtung nur wenig vorspringende periphere Ringrippe 74 abgestützt und dadurch im übrigen von dem Bodenbereich 73 in einem axialen Abstand gehalten, wodurch insoweit Raum für die Ausgangsdruckkammer 47 des Bremsventils 28 verbleibt, die durch das zweite Zentrierstück 62 und den zentralen Gehäuseblock 58 begrenzt ist.

Das als Kugel-Sitzventil ausgebildete Einlaßventil 44, zu dessen Erläuterung ergänzend auch auf die Einzelheiten der Fig. 3 Bezug genommen sei, hat einen konischen Ventilsitz 76, der die der Eingangsdruckkammer 46 zugewandte Mündungsöffnung 77 einer zentralen Durchgangsbohrung 78 des zweiten Zentrierstückes 62 koaxial umgibt, welche innerhalb des zweiten Zentrierstückes 62 in einen sich konisch erweiternden zentralen Bereich der Ausgangsdruckkammer 47 mündet. Der Durchmesser $d_1$ dieser zentralen Durchgangsbohrung 78 ist deutlich kleiner als der Durchmesser $d_2$ der Ventilkugel 79 des Einlaßventils 44, wobei

das Verhältnis $d_1/d_2$ einen Wert um 1/3 hat. Der auf die zentrale Längsachse 53 des Bremsventils 28 bezogene Öffnungswinkel des konischen Ventilsitzes 76 ist, zwischen 60° und 70° betragend, relativ groß, so daß, wenn die Ventilkugel 79 dichtend an dem Ventilsitz 76 anliegt, die kreisförmige Berührungslinie zwischen der Ventilkugel 79 und ihrer Sitz 76 in unmittelbarer Nähe des Randes der Mündungsöffnung 77 der zentralen Durchgangsbohrung 78 des zweiten Zentrierstückes 62 verläuft oder durch diesen Rand der Mündungsöffnung 77 selbst gebildet ist.

Der Höchstbetrag $K_S$ der am Beginn einer Bremsung, d.h. in einer Situation, in der die Ausgangsdruckkammer 47 noch drucklos ist und die Ventilkugel 79 durch die Wirkung des in der Eingangsdruckkammer 46 herrschenden Druckes $P_S$ und der Vorspannung einer Ventilfeder 81, welche, mit ihrem einen Ende an der Ventilkugel 79 angreifend die Eingangsdruckkammer 46 axial durchsetzt und mit ihrem anderen Ende an dem Verschlußstopfen 66 abgestützt ist, gegen den Ventilsitz 76 gedrängt ist, aufgebracht werden muß, um das Einlaßventil 44 zu öffnen, ist dann in guter Näherung durch die Beziehung

$$K_S = F_1 \cdot P_S + K_R \qquad (1)$$

gegeben ist, in welcher mit $F_1$ die lichte Querschnittsfläche der zentralen Durchgangsbohrung 78 des zweiten Zentrierstückes 62 und mit $K_R$ die wirksame Rückstellkraft der Ventilfeder 81 bzeichnet sind, deren Betrag einem Druck von nur wenigen bar äquivalent ist.

Die Öffnungsbetätigung des Einlaßventils 44 erfolgt durch axiale Verschiebung eines insgesamt mit 82 bezeichneten Steuerkolbens, der mit einem schlanken, rohrförmigen Führungsabschnitt in einer zentralen, axialen, beim dargestellten Ausführungsbeispiel mit der die Eingangsdruckkammer 46 bildenden Bohrung des Gehäuseabschlußblocks 63 fluchtenden Bohrung 84 des zentralen Gehäuseblocks 58 verschiebbar geführt ist und an seinem in die Ausgangsdruckkammer 47 hineinragenden Ende in einen schlanken Betätigungsstößel 86 übergeht, durch dessen Angreifen an der Ventilkugel 79 das Einlaßventil 44 geöffnet werden kann.

Der Durchmesser $d_1$ der zentralen Durchgangsbohrung 78 des zweiten Zentrierblocks 62 und der Durchmesser $d_3$ des Betätigungsstößels 86 sind derart aufeinander abgestimmt, daß der im geöffneten Zustand des Einlaßventils 44 freigegebene, radial außen durch die Bohrung 78 des zweiten Zentrierstückes 62 und radial innen durch den Betätigungsstößel 86 begrenzte Ringkanal als Drossel wirkt, durch die sich eine wirksame durch die Dimensionierung der Bohrung 78 und des Betätigungsstößels 86 vorgebbare Begrenzung der Druck-Anstiegsrate im Ausgangsdruckraum 47 des Bremsventils 28 ergibt, auch wenn die Ventilkugel 79 schon ab Beginn der Bremsung in die ihrem maximalen Öffnungshub entsprechende axiale Distanz von dem Ventilsitz 76 gelangt ist.

Zwischen dem konischen Ventilsitz 76 und dem durch die axiale Bohrung 64 des Gehäuseabschlußblocks 63 gebildeten Bereich der Eingangsdruckkammer 46 vermittelt ein kurzer rohrförmiger Abschnitt 88, dessen lichter Durchmesser kleiner ist als derjenige der zentralen Bohrung 64 und nur wenig größer als der Durchmesser $d_2$ der Ventilkugel 79, so daß zwischen dieser und dem rohrförmigen Abschnitt 88 des zentralen Kanals des zweiten Zentrierstückes ein ringförmiger Drosselspalt 89 vorhanden ist, dessen Weite, so lange die Kugel 79 in Öffnungsrichtung des Ventils 44, d.h. in Richtung des Pfeils 91 verschoben wird, zunächst konstant bleibt und sich erst dann nennenswert vergrößert, wenn die Kugel 79 gleichsam aus diesem rohrförmigen Abschnitt 88 austritt und in die Nähe ihrer gestrichelt eingezeichneten Position gelangt, die maximalem Verschiebeweg des Steuerkolbens 82 entspricht. Durch den bei einer Öffnungsbetätigung des Einlaßventils über diesem Drosselspalt 89 auftretenden Druckabfall ergibt sich, zusätzlich zu der Rückstellkraft $K_R$ der Ventilfeder 81, eine die Ventilkugel 79 in Anlage mit dem Betätigungsstößel 86 des Steuerkolbens 82 drängende Kraft, die der vom Fahrer ausgeübten Betätigungskraft entgegenwirkt und insoweit am Bremspedal 17 zu einer realistischen Rückmeldung über den in die Radbremsen 11,12 eingekoppelten Bremsdruck beiträgt.

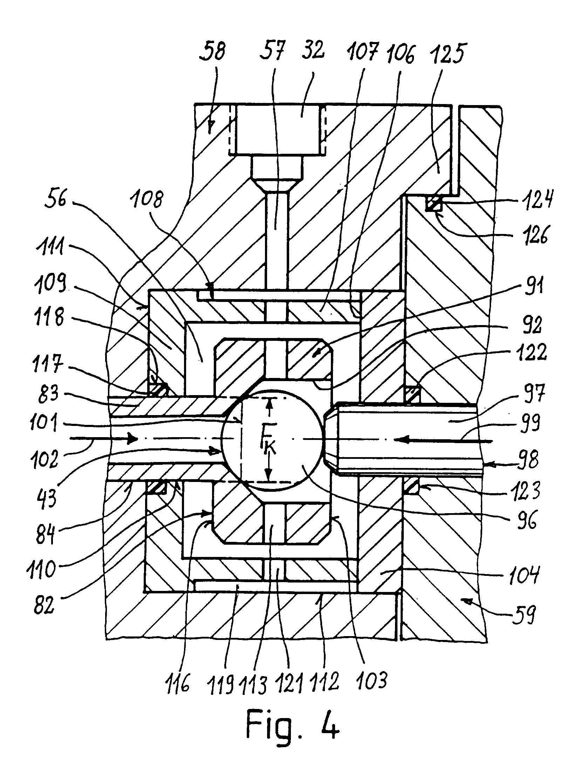

Der Steuerkolben 82 hat einen innerhalb der zentralen Entlastungskammer 56 angeordneten blockförmigen Flansch 91 mit einer axial durchgehenden Bohrung 92, die über einen wiederum konischen Ventilsitz, der sich zu der zentralen Bohrung 84 des rohrförmigen Führungsabschnittes 83 des Steuerkolbens 82 hin verjüngt, an diesen anschließt. Diese zentrale Bohrung 84 des Führungsabschnittes 83 des Steuerkolbens 82 steht über eine Querbohrung 94, die an dem mit dem Betätigungsstößel 86 versehenen Endabschnitt des Führungsabschnittes 83 angeordnet ist, mit der Ausgangsdruckkammer 47 in ständig-kommunizierender Verbindung. Dadurch ist die Ventilkugel 96 des Auslaßventils 43, zu dessen Erläuterung nunmehr auch auf die Detaildarstellung der Fig. 4 verwiesen sei, solange gebremst wird und sich hierbei das Auslaßventil in seiner sperrenden Funktionsstellung befindet, die im dargestellten Fall einer Situation entspricht, in welcher ein definierter, "mittlerer" Bremsdruck in die Radbremsen 11,12 eingekoppelt ist und daher der Steuerkolben 82 eine Mittelstellung als Gleichgewichtsstellung einnimmt, in welcher die über einen axialen Stößel 97 eines durch Betätigung des Bremspedals 17 hin- und herverschiebbaren, insgesamt mit 98 bezeichneten Betätigungskolbens an der Ventilkugel 96 in Richtung des Pfeils 99 angreifende Betätigungskraft $K_B$ ausreicht, um die Ventilkugel 96 in ihrer das Auslaßventil 43 sperrenden Funktionsstellung zu halten, auf derjenigen Fläche $F_K$, die durch die kreisförmige Konturenlinie 101 berandet ist, mit der die Ventilkugel 96 an dem Ventilsitz 93 des Auslaßventils 43 anliegt, mit dem in der Ausgangsdruckkammer 47 herrschenden Druck - dein Bremsdruck $P_B$ - beaufschlagt ist, wobei die hieraus resultierende, auf die Ventilkugel 96 in Richtung des Pfeils 102 wirkende Kraft $K_B$, der Betätigungskraft $K_B$ entgegengesetzt gerichtet und dem Betrage nach dieser gleich ist.

Die Ventilkugel 96 des Auslaßventils 43 und dessen konischer Ventilsitz 93 sind zweckmäßigerweise so dimensioniert und gestaltet, daß die Fläche $F_K$, innerhalb derer die Ventilkugel 96 des Auslaßventils 43 durch den herrschenden Bremsdruck $P_B$ in Öffnungsrichtung beaufschlagt ist, annähernd gleich, vorzugsweise etwas kleiner als die lichte Querschnittsfläche der zentralen, in die Ausgangsdruckkammer 47 mündenden Bohrung 84 ist, innerhalb derer der Führungsabschnitt 83 des Steuerkolbens 82, seinerseits, mit dem in der Ausgangsdruckkkammer 47 herrschenden Bremsdruck $P_B$ beaufschlagt ist und dadurch auf den Steuerkolben 82 die der Betätigungskraft $K_B$ entgegengesetzte Rückstellkraft wirkt. In spezieller Gestaltung entspricht die Fläche $F_K$ etwa 95 % der lichten Querschnittsfläche der Bohrung 84.

Die minimalem Rest-Bremsdruck bei Zurücknahme des Bremspedals und auch dem nicht betätigten Zustand der Bremsanlage entsprechende Endstellung des Steuerkolbens 82 ist durch Anlage der pedalseitigen ringförmigen Endstirnfläche 103 seines blockförmigen Flansches 91 an einer von dem axialen Stößel 97 des Betätigungskolbens 98 durchquerten Distanzringscheibe 104 markiert, über die das erste, blockförmige Zentrierstück 59 an der freien ringförmigen Endstirnfläche 106 des zylindrischen Mantels 107 eines topfförmig gestalteten Dichtring-Halters 108 abgestützt ist, der seinerseits mit seinem Bodenteil 109, das eine von dem Führungsabschnitt 83 des Steuerkolbens 82 durchquerte, mit der zentralen Führungsbohrung 84 des zentralen Gehäuseblocks 58 fluchtende Durchtrittsbohrung 110 hat, an einer radialen Stufenfläche 111 des zentralen Gehäuseblocks 58 axial abgestützt ist, die zwischen der zentralen Führungsbohrung 84 und der dem Durchmesser nach größeren Bohrungsstufe 112 vermittelt, welche die radial äußere Begrenzung der Entlastungskammer 56 bildet.

Damit auch in dieser Endstellung des Steuerkolbens 82 Bremsflüssigkeit aus der Ausgangsdruckkammer 47 des Bremsventils 18 in dessen Entlastungskammer 56 und über diese zum Bremsflüssigkeitsvorratsbehälter überströmen kann, ist der blockförmige Flansch 91 des Stellkolbens 82 mit radial durchgehenden Querkanälen 113 versehen, die in unmittelbarer Nähe des Ventilsitzes 93 in die Durchgangsbohrung 92 des Flansches 91 münden.

Die andere, maximaler Betätigungskraft und Bremsdruck-Entfaltung entsprechende Endposition des Steuerkolbens 82 ist durch Anlage eines radialen Flansches 146 des Betätigungskolbens 98 an einer ringförmigen Anschlagfläche 115 des von dem axialen Stößel 97 des Betätigungskolbens durchsetzten ersten Zentrierstücks 59 des Ventilgehäuses 48 markiert und mit einer Position des Stellkolbens 82 verknüpft, in der die Ventilkugel 79 des Einlaßventils 44 weitestmöglich von dessen Sitz 76 abgehoben ist und etwa die in der Fig. 3 gestrichelt eingezeichnete Position einnimmt, wobei in dieser Position des Steuerkolbens 82 die dem Boden 109 des Dichtringhalters 108 zugewandte Ringstirnfläche 116 seines blockförmigen Flansches 91 noch in einem kleinen axialen Abstand von dem Bodenteil 109 angeordnet ist. Die hochdruckfeste Abdichtung der Ausgangsdruckkammer 47 gegenüber der Entlastungskammer 56 des Strömungsventils 28 - bei geschlossenem Auslaßventil 43 desselben - vermittelt eine z.B. als O-Ring ausgebildete Ringdichtung 117, die, an der äußeren Mantelfläche des Führungsabschnittes 83 des Steuerkolbens dichtend anliegend, zwischen einem Ringfalz 118 des Bodenteils 109 des Dichtringhalters 108 und der radialen Stufenfläche 111 des zentralen, blockförmigen Gehäuseteils 58 stramm eingespannt, den von dem Führungsabschnitt 83 durchsetzten Führungskanal sowohl nach außen als auch gegen die Entlastungskammer 56 abdichtet, einer Verschiebung des Steuerkolbens 82 jedoch nur einen mäßigen Reibungswiderstand entgegensetzt, der einein mäßigen Druck von nur etwa 2 bis 5 bar äquivalent ist.

Der Außendurchmesser des sich zwischen der Distanzringscheibe 104 und dein Bodenteil 109 erstreckenden Mantelteils 107 des Dichtringhalters 108 ist etwas geringer als der Durchmesser der größeren Bohrungsstufe 112, in die der Dichtringhalter 108 eingesetzt ist, so daß durch den Dichtringhalter 108 und diese größere Bohrungsstufe 112 des zentralen blockförmigen Gehäuseteils 58 ein in radialer Richtung nur wenig ausgedehnter, in axialer Richtung sich über das Mantelteil 107 erstreckender Ringraum 119 vorhanden ist, der über durchgehende radiale Querkanäle 121 mit dem inneren Teil der Entlastungskammer 56 in kommunizierender Verbindung gehalten ist.

Die Abdichtung der Entlastungskammer 56 gegen den von dem rohrförmigen Gehäuseteil 61 umschlossenen, zum Bremspedal 17 hin offenen Gehäuseraum 161 vermittelt eine den zylindrischen, Axialstößel 97 des Betätigungskolbens 98 umspannender Dichtring 122, der zwischen einem kammerseitigen Ringfalz 123 des blockförmigen Zentrierstückes 59 und der an diesein abgestützten Distanzringscheibe 104 dichtend eingespannt ist und den Steuerbewegungen des Stößels 97 bzw. des Betätigungskolbens 98 ebenfalls nur einen allenfalls geringfügigen Reibungswiderstand entgegensetzt, der einem Druck von nur etwa 2 bis 5 bar äquivalent ist.

Die Abdichtung der Entlastungskammer 56 nach außen vermittelt ein O-Ring 124 der zwischen der inneren zylindrischen Mantelfläche einer axial nur wenig vorspringenden Zentrierrippe 125 des zentralen blockförmigen Gehäuseteils 58 und dem Grund einer Umfangsnut 126 eines blockseitigen Zentrierabschnitts des ersten, blockförmigen Zentrierstückes 59 eingespannt ist. Auf entsprechende Weise sind die Ausgangsdruckkammer 47 und die Eingangsdruckkammer 46 mittels je eines Dichtringes 126 bzw. 127 nach außen abgedichtet, die zwischen Umfangsnuten des zweiten Zentrierstückes und diese gleichsam abschließende Mantelflächen der Zentrierrippen des zentralen blockförmigen Gehäuseteils 58 und des Gehäuseabschlußblocks 63 angeordnet sind.

Die insoweit erläuterten Gehäuseteile sind durch in axialsymmetrischer Gruppierung bezüglich der zentralen Achse 53 vorgesehene Ankerschrauben 128 axial aneinandergepreßt und zusammengehalten, die mit ihren Köpfen an der pedalfernen Seite des Gehäuseabschlußblocks 63 abgestützt sind und miteinander fluchtende Bohrungen des Gehäuseabschlußblocks 63, des zentralen Gehäuseblocks 58 eines radialen Flansches des blockförmigen, ersten Zentrierstückes 96 durchquerende und mit axialen Gewinden des rohrförmigen Gehäuseteils 61 in Eingriff stehende Gewindebolzen haben.

Dieses rohrförmige Gehäuseteil 61 hat einen an das erste Zentrierstück 59 anschließenden ventilseitigen Abschnitt 129 größeren Durchmessers und einen zum Bremspedal hin offenen, pedalseitigen Abschnitt 131 etwas kleineren Durchmessers, der gegenüber dem ventilseitigen Abschnitt 129 durch eine radiale Anschlagstufe 132 abgesetzt ist. In dein pedalseitigen Abschnitt 131 des rohrförmigen Gehäuseteils ist ein langgestreckt-zylindrisch topfförmiges, insgesamt mit 133 bezeichnetes Gleitstück mit seinem Bodenteil 134 zum Bremspedal 17 hinweisend und mit seinem Mantelteil 136 zum ersten Zentrierstück 59 hinweisend hin- und herverschiebbar geführt, wobei dieses Gleitstück 133, an dessen Bodenteil 134 der mit dem Bremspedal 17 gelenkig verbundene Pedalstößel 137 zentral angreift, durch eine schwach vorgespannte Wendelfeder 138, die mit ihrem einen Ende an dem ersten Zentrierstück 59 und mit ihrem anderen Ende an der diesem zugewandten Innenseite des Bodenteils 134 des Gleitstücks 133 axial abgestützt ist und mit diesem zusammen den Wegsimulator 27 bildet, in seine dargestellte, dem nicht betätigten Zustand der Fremdkraft-Bremsanlage 10 zugeordnete Ausgangsstellung gedrängt wird, die durch Anlage eines radialen Anschlagflansches 139 des Mantelteils 136 des Gleitstückes 133 an der radialen Anschlagstufe 132 des rohrförmigen Gehäuseteils 61 markiert ist. Der maximale Auslenkungshub des Gleitstückes 133, mit dem über den Pedalstößel 137 auch die maximale azimutale Auslenkung des Bremspedals 17 um seine "karosseriefeste" Schwenkachse 141 korreliert ist, ist durch Anlage des radialen Anschlagflansches 39 des Mantelteils 136 an der diesem zugewandten, radial äußeren Ringstirnfläche 142 des ersten, blockförmigen Zentrierstückes 59 markiert. Die axiale Länge des Mantelteils 136 des Gleitstückes 133, innerhalb derer dieses die Wendelfeder 138 koaxial umschließt, ist geringfügig größer als die Blocklänge der Wendelfeder 138.

Das erste blockförmige Zentrierstück 59 hat an seiner dem Gleitstück 133 zugewandten Seite eine zylindrischtopfförmige Vertiefung 143, an deren ringförmiger, radialer Bodenfläche 144 das eine Ende eines Tellerfederpakets 114 abgestützt ist, das als Rückstellfeder vorgesehen ist, deren anderes Ende an dem radialen Flansch 146 des Betätigungskolbens abgestützt ist, mit dem dieser innerhalb der zylindrisch-topfförmigen Vertiefung 143 des ersten blockförmigen Zentrierstückes 59 axial verschiebbar geführt ist.

An der dem Tellerfederpaket 114 abgewandten Seite des radialen Flansches 146 des Betätigungskolbens 98 ist das eine Ende einer - schwach - vorgespannten Wendelfeder 147 abgestützt, deren anderes Ende an einem radialen Flansch 148 einer Fesselhülse 149 abgestützt ist, die durch die Wirkung der Wendelfeder 147 in eine Position maximalen - axialen - Abstandes von dem radialen Flansch 146 des Betätigungskolbens 98 gedrängt ist, die durch Anschlagwirkung einer radialen Innenschulter 151 der Fesselhülse 149 mit einem Anschlagkopf 152 des Betätigungskolbens 98 markiert ist, wobei dieser Anschlagkopf 152 das pedalseitige Ende eines Fesselstabes 153 bildet, der, von dein radialen Flansch 146 ausgehend, einen Teil der Fesselhülse 149 durchsetzt und sich mit dem Anschlagkopf 152 pedalseitig an der Innenschulter 151 der Fesselhülse abstützt.

In der dem nicht betätigten Zustand der Bremsanlage 10 bzw. des Bremsventils 28 entsprechenden, in der Fig. 2 dargestellten Position der Fesselhülse 149 hat deren pedalseitig angeordneter radialer Flansch 148 von einer ringförmigen, radialen Anschlagschulter 154 des Bodenteils 134 des Gleitstücks 133 einen einem kurzen Leerweg des Bremspedals entsprechenden axialen Abstand von 1 bis 2 mm, der etwa 1/20 bis 1/10 des maximalen Betätigungshubes entspricht, den das Gleitstück 133 ausführt, wenn es, ausgehend von seiner dargestellten, dem nicht betätigten Zustand der Bremsanlage entsprechenden Grundstellung bis in seine mit maximalem Bremsdruck verknüpfte Endstellung verschoben wird, in der der radiale Anschlagflansch 139 des Gleitstückes 133 an der Ringstirnfläche 142 des ersten Zentrierstückes 59 und die diesem zugewandte Endstirnfläche 156 der Fesselhülse 149 an einem die zentrale Wendelfeder 147 zentrierenden Fortsatz 157 des radialen Flansches 146 des Betätigungskolbens 98 anliegen.

Das Bodenteil 134 des Gleitstücks 133 ist mit einer zentralen, axialen Sackbohrung 158 versehen, in die der Anschlagkopf 152 des Fesselstabes 153 eintauchen kann, damit das Gleitstück 133 bis in seine maximalem Bremsdruck entsprechende Position verschoben werden kann. Desweiteren ist das Bodenteil 134 des Gleitstücks 133 mit einer am Grund der Sackbohrung 158 in diese mündenden Entlastungsbohrung 159 versehen, über die bei einer Betätigung des Bremsventils 28 Luft aus dem in radialer Richtung durch das rohrförmige Gehäuseteil 61 und in axialer Richtung beweglich durch das Gleitstück 133 begrenzten Innenraum 161 des Bremsventilgehäuses 48 entweichen kann.

Wird, ausgehend von den in der Fig. 2 dargestellten Grundstellungen des Bremspedals 17 und der einzelnen Funktionselemente des Bremsventils 18 mit einer Bremsung begonnen, so führt das Gleitstück 133 zunächst einen kleinen Leerweg aus, bis es mit seiner Anschlagschulter 154 auf den radialen Flansch 148 der Fesselhülse 149 auftrifft, wonach erst unter zunehmender Kompression der langgestreckten, schwach vorgespannten Wendelfeder 147, deren Vorspannung klein gegen diejenige der Wegsimulationsfeder 138 ist, sowie des Tellerfederpakets 114, dessen Vorspannung wiederum klein gegen diejenige der langgestreckten Wendelfeder 147 ist, eine Verschiebung des Betätigungskolbens 98 erfolgt, durch die die Ventilkugel 96 des zunächst noch offenen Einlaßventils 43 in ihre dichtende Anlage mit dem Ventilsitz 93 gelangt, wodurch das Einlaßventil 43 geschlossen wird. Sobald die in Richtung des Pfeils 99 auf die Ventilkugel 96 und den Steuerkolben 82 wirkende Betätigungskraft ausreicht, die am Dichtring 83 wirksame Haftreibung zu überwinden, erfährt auch der Steuerkolben 82 eine Verschiebung in der Angriffsrichtung 99 der Betätigungskraft, wodurch der Betätigungsstößel 86 mit seinem freien Ende in Anlage mit der Ventilkugel 79 des zunächst noch geschlossenen Einlaßventils 44 gelangt, die mit der durch die Beziehung (1) gegebenen "Schließ"-Kraft gegen ihren Sitz 76 gedrängt wird. Sobald diese Kraft durch weitere Verschiebung des Gleitstückes 133 und die damit einhergehende Vergrößerung der über die Wendelfeder 147 auf den Betätigungskolben 98 ausgeübten Kraft überwunden ist und die Ventilkugel 79 von ihrem Sitz 76 abgehoben hat, entfällt zwar derjenige Rückstellkraft-Anteil $F_1 \cdot P_S$, der durch die Druckbeaufschlagung der Ventilkugel auf der "Sitz"-Fläche $F_1$ mit dem Ausgangsdruck $P_S$ des Druckspeichers 19 resultiert hatte, d.h. der Fläche die durch die Berührungslinie berandet ist, entlang derer die Kugel 79 an der Sitzfläche 76 bei geschlossenem Ventil anliegt, jedoch wird nunmehr, bedingt durch die Drosselwirkung des peripheren Ringspaltes 89 und die hieraus resultierende Stauung des Bremsflüssigkeits-Stromes an der Ventilkugel 79, wieder eine Rückstellkraft vergleichbaren Betrages aufgebaut, die verhindert, daß das Einlaßventil 44 zu schnell öffnet und damit der Druckaufbau in der Ausgangsdruckkammer 47 schlecht dosierbar würde. Diese Drosselung ist insbesondere dann von Bedeutung, wenn der Fahrer nur einen relativ niedrigen Bremsdruck in die Radbremsen 11,12 einsteuern möchte, d.h. bei relativ geringer Betätigungskraft auch mit entsprechend geringen Hüben der Ventilkugel 79 des Einlaßventils 44 den Bremsdruck genau dosieren möchte.

Will der Fahrer andererseits eine hohe Fahrzeugverzögerung erreichen, wozu eine Betätigung des Bremspedals 17 mit großem Schwenkhub und entsprechend großem axialem Auslenkungshub des Gleitstückes 133 erforderlich ist, die im Einlaßventil 44 zu einem Ausrücken der Ventilkugel 79 aus dem die Drosselstelle 89 begrenzenden rohrförmigen Abschnitt 88 bis hinein in die zentrale axiale Bohrung 64 des Gehäuseabschlußblocks 63 führt, so wird die Druckanstiegs-Rate in der Druckausgangskammer 47 durch die durch den Ringkanal 87 und den Betätigungsstößel 86 des Steuerkolbens 82 gebildete Drossel begrenzt und die gute Dosierbarkeit des Bremsdruckes dadurch gewährleistet, daß zu einer Änderung des Bremsdruckes erforderliche Änderungen der Betätigungskraft, die der Fahrer noch ausüben kann, ohnehin relativ klein gegen den Absolutbetrag der Kraft sind, die er gegen die Rückstellkraft der Weg-Simulationsfeder 138 aufbringen muß.

Zur Erläuterung einer typischen Auslegung des Bremsventils 28 sei angenommen, daß der Außendurchmesser des stößelförmigen Führungsabschnittes 83 des Steuerkolbens 82 einen Wert von etwa 4 mm habe, was einem Betrag von 0,126 cm$^2$ der wirksamen Querschnittsfläche $F_S$ entspricht, innerhalb derer der Steuerkolben 82 im Bremsbetrieb mit dem in der Ausgangsdruckkammer 47 herrschenden Druck $P_S$ beaufschlagt ist. Desweiteren sei vorausgesetzt, daß die Pedalübersetzung einen Wert von 1/5 habe und der maximale Hub, den das Gleitstück 133 zwischen seiner dem nicht betätigten Zustand der Bremsanlage entsprechenden Grundstellung und der maximalem Ausgangsdruck von z.B. 180 bar entsprechenden Endstellung ausführen kann, 4 cm betrage.

Unter diesen Annahmen ergibt sich, daß der Maximalbetrag der Vorspannung, den die Übertragungsfeder 147 - um 4 cm komprimiert - entfalten muß, etwa 200 N beträgt, was einer Federrate $C_B$ dieser Feder 147 von 50 N/cm entspricht. Unter der weiteren Annahme, daß die maximale Kraft $K_p$, die der Fahrer auf das Bremspedal 17 ausüben kann etwa 400 N beträgt, mithin auf das Gleitstück 133 eine Betätigungskraft von insgesamt 2000 N ausübbar ist, so muß für diesen Fall von der als Wegsimulator ausgesetzten Reaktionsfeder 138 noch eine zusätzliche Rückstellkraft von 1800 N entfaltbar sein, was einer Federrate CR von 450 N/cm entspricht.

Die Federrate des Tellerfederpakets 114, das lediglich als Rückstellfeder ausgenutzt ist, durch die der Betätigungskolben 98 so weit verschoben werden kann, daß die Ventilkugel 96 des Auslaßventils 43 im nicht betätigten Zustand des Bremsventils 28 von ihrem Sitz abheben kann, soll klein gegen die Federrate $C_B$ der Übertragungsfeder 147 sein.

**Patentansprüche**

1. Ventilanordnung für die Bremsdrucksteuerung bei einer hydraulischen Fremdkraftbremsanlage eines Straßenfahrzeuges, bei der durch Betätigung eines Bremsventils ein zu der Betätigungskraft proportionaler Druck in einer an einen Bremskreis des Fahrzeuges angeschlossenen Ausgangsdruckkammer (47) aufbaubar ist, wobei dieser Druck zwischen dem hohen Ausgangsdruckniveau eines als Druckquelle vorgesehenen Druckspeichers (19) und den dem niedrigen Umgebungsdruck entsprechenden Druckhiveau des Bremsflüssigkeits-Vorratsbehäl-

ters (22) der Bremsanlage variierbar ist mit einem ersten, als 2/2-Wegeventil wirkenden Kugelsitzventil (43), das durch axiale Verschiebung eines Betätigungskolbens (98), an dem die Betätigungskraft angreift, aus seiner im nicht-betätigten Zustand des Bremsventils eingenommenen Offenstellung, in der die Ausgangsdruckkammer (47) über dieses erste Kugelsitzventil mit einer mit dem Bremsflüssigkeits-Vorratsbehälter (22) in ständig-kommunizierender Verbindung stehenden Entlastungskammer (56) des Bremsventils verbunden ist, in seine Sperrstellung steuerbar ist, in der die Ventilkugel (96) in dichtende Anlage gegen ihren an einem axial verschiebbaren Steuerkolben (82) des Bremsventils angeordneten Sitz (93) gedrängt ist, und mit einem zweiten, als 2/2-Wegeventil ausgebildeten Kugelsitzventil (44), das, nachdem das erste, als Auslaßventil (43) dienende Kugelsitzventil in seine Sperrstellung gelangt ist, durch weitere axiale Verschiebung des Betätigungskolbens (98) und des Steuerkolbens (82) aus seiner zuvor als Grundstellung eingenommenen Sperrstellung, in der eine ständig unter dem hohen Ausgangsdruck des Speichers stehende Eingangsdruckkammer (46) des Bremsventils gegen die Ausgangsdruckkammer (47) abgesperrt ist, in seine diese beiden Ventilkammern miteinander verbindende Offenstellung gelangt und als Gleichgewichtsstellung, der Gleichheit der auf den Steuerkolben (82) wirkenden Betätigungskraft und der aus der Druckbeaufschlagung seiner dem Ausgangsdruck ausgesetzten Kolbenfläche resultierenden Reaktionskraft entspricht, wieder seine Sperrstellung einnimmt, **dadurch gekennzeichnet**, daß der Betätigungskolben (98) an der Ventilkugel (96) des ersten Kugel-Sitz-Ventils (43) axial abstützbar und diese dadurch in dichtende Anlage mit ihrem Sitz (93) drängbar ist, daß der Ventilsitz (93) dieses Kugel-Sitz-Ventils an dem Steuerkolben (82) angeordnet ist, durch dessen axiale Verschiebung das zweite Kugel-Sitz-Ventil (44), dessen Sitz (76) gehäusefest angeordnet ist, in seine Offen-Stellung bringbar ist, daß der Steuerkolben (82) in seiner dem nicht betätigten Zustand des Bremsventils (28) ensprechenden Grundstellung in einem definierten, einem kleinen Bruchteil seines möglichen Hubes entsprechenden axialen Abstand von der Ventilkugel (79) des zweiten Kugel-Sitz-Ventils (44) angeordnet ist und einen durchgehenden zentralen Längskanal (94) aufweist, der mit der Ausgangsdruckkammer (47) des Bremsventils (28) in ständig-kommunizierender Verbindung steht, in der Sperrstellung des ersten Kugel-Sitz-Ventils (43) jedoch gegen die Entlastungskammer (56) abgesperrt ist, daß der durch Öffnungsbetätigung des zweiten Kugel-Sitz-Ventils (44) freigebbare, vom Druckspeicher (19) über die Eingangsdruckkammer (46), das Kugel-Sitz-Ventil (44) und die Ausgangsdruckkammer (47) des Bremsventils (28) sowie die Hauptbremsleitung (16) des an die Ausgangsdruckkammer (47) angeschlossenen Bremskreises zu den Radbremsen führende Druckmittel-Strömungspfad mit einer den Höchstbetrag der Bremsdruck-Anstiegsrate auf eine vorgegebenen Wert begrenzenden Drossel (41;87) versehen ist, und daß durch die Ventilkugel (79) des zweiten Kugel-Sitz-Ventils (44) in einem an den Ventilsitz (76) anschließenden rohrförmigen Abschnitt (88) des sich zwischen der Eingangsdruckkammer (46) und der Ausgangsdruckkammer (47) erstreckenden zentralen Durchgangskanals des Ventilgehäuses (48) ein weiterer Drosselspalt (89) berandet ist.

2. Ventilanordnung nach Anspruch 1, **dadurch gekennzeichnet**, daß die den Höchstbetrag der Bremsdruck-Anstiegsrate begrenzende Drossel (41) zwischen den Druckausgang (32) des Bremsventils (28) und die an diesen angeschlossene(n) Radbremse(n) geschaltet ist.

3. Ventilanordnung nach Anspruch 1 oder 2, **dadurch gekennzeichnet**, daß die den Höchstbetrag der Bremsdruck-Anstiegsrate begrenzende Drossel (41) als Einstelldrossel ausgebildet ist.

4. Ventilanordnung nach einem der Ansprüche 1 bis 3, **dadurch gekennzeichnet**, daß ein zu der den Höchstbetrag der Bremsdruck-Anstiegsrate begrenzenden Drossel (41) hydraulisch parallel geschalteter, über ein Rückschlagventil (42), das durch den Ausgangsdruck des Bremsventils (28) sperrbar und durch höheren Druck im angeschlossenen Bremskreis als am Druckausgang (32) des Bremsventils (28) in Öffnungsrichtung beaufschlagt ist, führender Strömungspfad vorgesehen ist, dessen Strömungswiderstand wesentlich niedriger als derjenige der Drossel (41) ist.

5. Ventilanordnung nach Anspruch 1, **dadurch gekennzeichnet**, daß die den Höchstbetrag der Bremsdruck-Anstiegsrate begrenzenden Drossel in das Bremsventil (28) integriert ist.

6. Ventilanordnung nach Anspruch 5, **dadurch gekennzeichnet**, daß die Drossel durch einen sich in axialer Richtung erstreckenden Ringkanal (87) gebildet ist, der radial innen durch einen zur Öffnungsbetätigung des zweiten Kugelsitzventils (44) vorgesehenen, als axialer Fortsatz des Steuerkolbens (82) ausgebildeten Stößel (86) und radial außen durch eine innerhalb des Sitzes (76) dieses Ventils (44) mündende, von dem Stößel (86) axial durchsetzte Bohrung (78) des Ventilgehäuses (48) begrenzt ist.

7. Ventilanordnung nach Anspruch 6, **dadurch gekennzeichnet**, daß der Ventilsitz (76) die Form einer Kreiskegelfläche mit einem Öffnungswinkel von insgesamt 130° ± 10° hat, und daß der Durchmesser $d_2$ der Ventilkugel (79) drei- bis viermal größer ist als der Durchmesser $d_1$ der den Drosselkanal (87) außenseitig berandenden zentralen Durchgangsbohrung (78) des Ventilgehäuses (48).

8. Ventilanordnung nach Anspruch 7, **dadurch gekennzeichnet**, daß die zentrale Durchgangsbohrung (78) mit glatter Krümmung an die Kegelsitzfläche (76) anschließt.

9. Ventilanordnung nach einem der Ansprüche 1 bis 8, **dadurch gekennzeichnet**, daß der maximale Öffnungshub der Ventilkugel (79) größer ist als die axiale Ausdehnung des an den Ventilsitz (76) anschließenden rohrförmigen Bohrungsabschnittes (88), in dem die Ventilkugel (79) axial beweglich angeordnet ist.

10. Ventilanordnung nach Anspruch 9, **dadurch gekennzeichnet**, daß der die außenseitige Begrenzung des Drosselspalts (89) bildende rohrförmige Gehäuseabschnitt (88) mit glatter Krümmung an die ventilseitige axiale Begrenzung der Eingangsdruckkammer (46) anschließt.

11. Ventilanordnung nach einem der Ansprüche 1 bis 10, **dadurch gekennzeichnet**, daß zur Umsetzung eines Teils der vom Fahrer mittels des Bremspedals (17) auf ein im Gehäuse (48) des Bremsventils (28) axial verschiebbares Gleitstück (133) ausgeübten Pedalkraft in die für die Bremsdruck-Steuerungsbetätigung erforderliche auf den Betätigungskolben (98) des Bremsventils (28) wirkende Betätigungskraft eine durch Verschiebung des Gleitstücks (133) axial zusammendrückbare Übertragungsfeder (147) vorgesehen ist, die an einem radialen Stützflansch (146) des Betätigungskolbens (98) angreift und im zentralen Bereich des Gleitstücks (133) an diesem abstützbar ist, und daß eine zweite, die Übertragungsfeder (147) koaxial umgebende, an dem in Gleitstück (133) einerseits und an einer gehäusefesten Stützfläche (142), andererseits abgestützte Reaktionsfeder (138) vorgesehen ist, deren Federweg mindestens demjenigen der Übertragungsfeder (147) entspricht.

12. Ventilanordnung nach Anspruch 11, **dadurch gekennzeichnet**, daß das Verhältnis ($C_B/C_R$) der Federrate ($C_B$) der Übertragungsfeder (147) zu der Federrate ($C_R$) der Reaktionsfeder (138) einen Wert zwischen 1/6 und 1/12, vorzugsweise einen Wert um 1/10 hat.

13. Ventilanordnung nach Anspruch 11 oder 12, **dadurch gekennzeichnet**, daß die Übertragungsfeder (147) an den Betätigungskolben (98) gefesselt ist, wobei ein das pedalseitige Ende der Übertragungsfeder stützender radialer Endflansch (148) einer zur Fesselung der Übertragungsfeder (147) vorgesehenen, relativ zum Betätigungskolben (98) axial verschiebbaren Hülse (149) in dessen dem nicht betätigten Zustand des Bremsventils (28) entsprechender Grundstellung in einem kleinen axialen Abstand von dem Gleitstück (133) angeordnet ist, der einem Bruchteil von 1/20 bis 1/10 des maximalen Verschiebeweges des Gleitstücks (133) entspricht.

**Claims**

1. Valve arrangement for controlling the brake pressure in a hydraulic power-brake system of a road vehicle, in which arrangement, by actuating a brake valve, a pressure which is proportional to the actuation force can be built up in an outlet pressure chamber (47) connected to a brake circuit of the vehicle, it being possible to vary this pressure between the high output pressure level of a pressure accumulator (19) provided as pressure source and the pressure level, corresponding to the low ambient pressure, of the brake fluid reservoir vessel (22) of the brake system, with a first ball-seat valve (43) which acts as a 2/2 way valve, and which, as a result of axial displacement of an actuation piston (98) on which the actuation force acts, can be adjusted out of its open position, which is assumed in the non-actuated state of the brake valve and in which the outlet pressure chamber (47) is connected via this first ball-seat valve to a relief chamber (56) of the brake valve which has a continuously communicating connection to the brake fluid reservoir vessel (22), into its blocking position in which the valve ball (96) is pressed in sealing contact against its seat (93) which is arranged on an axially displaceable control piston (82) of the brake valve, and with a second ball-seat valve (44) which is constructed as a 2/2 way valve and which, after the first ball-seat valve, which serves as an outlet valve (43), has moved into its blocking position, moves, as a result of further axial displacement of the actuation piston (98) and of the control piston (82), out of its blocking position, previously assumed as normal position, in which a brake valve inlet pressure chamber (41) which is continuously subjected to the high outlet pressure of the accumulator is blocked off with respect to the outlet pressure chamber (47), into its open position which connects these two valve chambers to one another and assumes its blocking position again, as equilibrium position which corresponds to equality between the actuation force acting on the control piston (82) and the reaction force resulting from the application of pressure to its piston face which is subjected to the outlet pressure, characterized in that the actuation piston (98) can be supported axially on the valve ball (96) of the first ball-seat valve (43) and the said valve ball (96) can, as a result, be pressed into sealing contact with its seat (93), in that the valve seat (93) of this ball-seat valve is arranged on the control piston (82) by means of whose axial displacement the second ball-seat valve (44), whose seat (76) is arranged fixed to the housing, can be moved into its open position, in that, in its normal position corresponding to the non-actuated state of the brake valve (28), the control piston (82) is arranged at a defined axial distance, corresponding to a small fraction of its possible travel, from the valve ball (79) of the second ball-seat valve (44) and has a continuous central longitudinal passage (94) which has a continuously communicating connection to the outlet pressure chamber (47) of the brake valve (28), but in the blocking position of the first ball-seat valve (43) is blocked off with respect to the relief chamber (56), in that the pressure-medium flow path which can be cleared by opening-actuation of the second ball-seat valve (44) and which leads from the pressure accumulator (19) to the wheel brakes via the inlet pressure chamber (46), the ball-seat valve (44) and the outlet pressure chamber (47) of the brake valve (28) as well as the main brake line (16) of the brake circuit connected to the outlet pressure chamber (47) is provided with a restrictor (41; 87) which limits the maximum value of the brake-pressure rate of increase to a prescribed value, and in that a further restrictor gap (89) is bounded by the valve ball (79) of the second ball-seat valve (44) in a tubular section (88), adjoining the valve seat (76), of the central through-passage, extending between the inlet pressure chamber (46) and the outlet pressure chamber (47), of the valve housing (48).

2. Valve arrangement according to Claim 1, characterized in that the restrictor (41) which limits the maximum value of the brake-pressure rate of increase is connected between the pressure outlet (32) of the brake valve (28) and the wheel brake or brakes connected thereto.

3. Valve arrangement according to Claim 1 or 2, characterized in that the restrictor (41) which limits the maximum value of the brake-pressure rate of increase is constructed as an adjustable restrictor.

4. Valve arrangement according to one of Claims 1 to 3, characterized in that a flow path which is hydraulically connected in parallel with the restrictor (41) which limits the maximum value of the brake-pressure rate of increase and which leads via a non-return valve (42), which can be blocked by the outlet pressure of the brake valve (28) and is acted on in the opening direction by higher pressure in the connected brake circuit than at the pressure outlet (32) of the brake valve (28), the flow resistance of the said flow path being substantially lower than that of the restrictor (41).

5. Valve arrangement according to Claim 1, characterized in that the restrictor which limits the maximum value of the brake-pressure rate of increase is integrated into the brake valve (28).

6. Valve arrangement according to Claim 5, characterized in that the restrictor is formed by an annular passage (87) which extends in the axial direction and is delimited radially on the inside by a plunger (86), which is provided for the opening-actuation of the second ball-seat valve (44) and is constructed as an axial extension of the control piston (82), and is delimited radially on the outside by a hole (78), which opens inside the seat (76) of this valve (44) and is axially penetrated by the plunger (86), in the valve housing (48).

7. Valve arrangement according to Claim 6, characterized in that the valve seat (76) is in the shape of a circular cone with an angle of aperture of, in total, $130° \pm 10°$, and in that the diameter $d_2$ of the valve ball (79) is three to four times larger than the diameter $d_1$ of the central through-hole (78) of the housing (48), which bounds the restrictor channel (87) on the outside.

8. Valve arrangement according to Claim 7, characterized in that the central through-hole (78) adjoins the conical-seat surface (76) with a smooth curvature.

9. Valve arrangement according to one of Claims 1 to 8, characterized in that the maximum opening travel of the valve ball (79) is larger than the axial extent of the tubular hole section (88) which adjoins the valve seat (76) and in which the valve ball (79) is arranged in an axially movable way.

10. Valve arrangement according to Claim 9, characterized in that the tubular housing section (88) which forms the external delimitation of the restrictor gap (89) adjoins the valve-side axial delimitation of the inlet pressure chamber (46) with a smooth curvature.

11. Valve arrangement according to one of Claims 1 to 10, characterized in that, in order to convert a portion of the pedal force exerted by the driver, by means of the brake pedal (17), on a sliding element (133) which can be displaced axially in the housing (48) of the brake valve (28) into the actuation force which is required for the brake-pressure control actuation and which acts on the actuation piston (98) of the brake valve (28), a transmission spring (147) which can be compressed axially by displacing the sliding element (133) is provided, the said transmission spring (147) acting on a radial supporting flange (146) of the actuation piston (98) and being capable of being supported in the central area of the sliding element (133), on the latter, and in that a second reaction spring (138) which surrounds the transmission spring (147) coaxially and is supported on the sliding element (133) on the one hand and on a supporting face (142) which is fixed to the housing on the other and whose spring travel corresponds at least to that of the transmission spring (147) is provided.

12. Valve arrangement according to Claim 11, characterized in that the ratio ($C_B/C_R$) of the spring rate ($C_B$) of the transmission spring (147) with respect to the spring rate ($C_R$) of the reaction spring (138) has a value between 1/6 and 1/12, preferably a value around 1/10.

13. Valve arrangement according to Claim 11 or 12, characterized in that the transmission spring (147) is anchored to the actuation piston (98), a radial end flange (148), which supports the pedal-side end of the transmission spring, of a sleeve (149) which is provided for anchoring the transmission spring (147) and can be displaced axially in relation to the actuation piston (98), being arranged in its normal state which corresponds to the non-actuated state of the brake valve (28) at a small axial distance from the sliding element (133) which corresponds to a fraction of 1/20 to 1/10 of the maximum displacement path of the sliding element (133).

**Revendications**

1. Dispositif à soupapes pour la commande de la pression de freinage dans une installation hydraulique de freinage indépendante d'un véhicule routier, dans lequel sous l'effet de l'actionnement d'une soupape de frein une pression proportionnelle à la force d'actionnement peut être établie dans une chambre de pression de sortie (47), qui est raccordée à un circuit de frein du véhicule, et dans lequel cette pression peut être modifiée entre le niveau élevé de pression de départ d'un accumulateur de pression (19) prévu en tant que source de pression et le niveau de pression, qui correspond à la faible pression ambiante, du réservoir de liquide de frein (22) de l'installation de freinage peut être modifié avec une première soupape à bille et siège (43) agissant en tant que soupape à 2/2 voies et qui peut être commandée sous l'effet d'un déplacement axial d'un piston d'actionnement (98), auquel est appliquée la force d'actionnement, depuis sa position ouverte, qu'elle occupe lorsque la soupape de frein est dans l'état non actionné et dans laquelle la chambre de pression de sortie (47) est reliée, par l'intermédiaire de cette première soupape à bille et siège à une chambre de détente (56) de la soupape de frein, qui est reliée en communication permanente au réservoir de liquide de frein (22), dans sa position bloquée, dans laquelle la bille de soupape (96) est repoussée de manière à être appliquée de façon étanche contre son siège (93) disposé sur un piston de commande déplaçable axialement (82) de la soupape de frein, et avec une seconde soupape à bille et siège (44) réalisée sous la forme d'une soupape à 2/2 voies et qui, une fois que la première soupape à bille et siège est utilisée comme soupape d'évacuation (43) est parvenue dans sa position bloquée, est amenée sous l'effet d'un autre déplacement axial du piston d'actionnement (98) et du piston de commande (82) depuis sa position bloquée, occupée au préalable en tant que position de base, dans laquelle une chambre de la pression d'entrée (46), placée en permanence à la pression initiale élevée de l'accumulateur, de la soupape de frein est bloquée vis-à-vis de la chambre de pression de sortie (47), dans sa position ouverte qui relie entre elles ces deux chambres de soupape et prend à nouveau sa position bloquée en tant que position d'équilibre, qui correspond à l'égalité entre la force d'actionnement agissant sur le piston de commande (82) et la force de réaction qui résulte de la charge en pression de la surface du piston soumise à la pression de départ, caractérisé en ce que le piston d'actionnement (98) peut prendre appui axialement sur la bille de soupape (96) de la première soupape à bille et siège (43) et que cette bille peut être repoussée de manière à s'appliquer de façon étanche contre son siège (93) par le fait que le siège (93) de cette soupape à bille et siège est disposé sur le piston de commande (82), sous l'effet du déplacement axial duquel la seconde soupape à bille et siège (44), dont le siège (76) est monté fixe sur le boîtier, peut être amenée dans sa position ouverte, que dans sa position de base correspondant à l'état non actionné de la soupape de frein (28), le piston de commande (82) est disposé à une distance axiale définie, qui correspond à une faible fraction de sa course de déplacement possible, de la bille (79) de la seconde soupape à bille et siège (44), et possède un canal longitudinal central continu (94), qui est relié à la chambre de pression de sortie (47) de la soupape de frein (28) selon une liaison de communication permanente, mais est bloqué vis-à-vis de la chambre de détente (56), lorsque la première soupape à bille et siège (43) est dans la position bloquée, que la voie de circulation du fluide sous pression, qui peut être libérée par l'actionnement d'ouverture de la seconde soupape à bille et siège (44) et relie l'accumulateur de pression (19) aux freins de roues en passant par la chambre de pression d'entrée (46), de la soupape à bille et siège (44) et de la chambre de pression de sortie (47) de la soupape de frein (28) ainsi que de la canalisation de frein principale (16) du circuit de freinage raccordé à la chambre de pression de sortie (47), est reliée à un étranglement (41;87) qui limite la valeur maximale du taux d'accroissement de la pression de freinage à une valeur prédéterminée, et qu'une autre fente d'étranglement (89) est définie par la bille (79) de la seconde soupape à bille et siège (44) dans une section tubulaire (88), qui se raccorde au siège de soupape (76), du canal central traversant du boîtier de soupape (48), qui s'étend entre la chambre de pression d'entrée (46) et la chambre de pression de sortie (47).

2. Dispositif à soupapes selon la revendication 1, caractérisé en ce que l'étranglement (41), qui limite la valeur maximale du taux d'accroissement de la pression de freinage, est branché entre la sortie de pression (32) de la soupape de frein (28) et le ou les freins de roues raccordé(s) à cette dernière.

3. Dispositif à soupapes selon la revendication 1 ou 2, caractérisé en ce que l'étranglement (41), qui limite la valeur maximale du taux d'augmentation de la pression de freinage, est agencé sous la forme d'un étranglement de réglage.

4. Dispositif à soupapes selon l'une des revendications 1 à 3, caractérisé en ce qu'il est prévu une voie d'écoulement, qui est branchée hydrauliquement en parallèle avec l'étranglement (41), qui limite la valeur maximale du taux d'accroissement de la pression de freinage, et qui passe par une soupape antiretour (42), qui peut être bloquée par la pression de sortie de la soupape de frein (28) et est chargée dans le sens de l'ouverture par une pression présente dans le circuit de frein raccordé, qui est plus élevée que sur la sortie de pression (32) de la soupape de frein (28), et dont la résistance d'écoulement est nettement inférieure à celle de l'étranglement (41).

5. Dispositif à soupapes selon la revendication 1, caractérisé en ce que l'étranglement, qui limite la valeur maximale du taux d'accroissement de la pression de freinage, est intégré dans la soupape de frein (28).

6. Dispositif à soupapes selon la revendication 5, caractérisé en ce que l'étranglement formé par un canal annulaire (87), qui s'étend dans la direction axiale et qui est limité radialement vers l'intérieur par un poussoir (86) prévu pour actionner l'ouverture de la seconde soupape à bille et siège (44) et est agencé en tant que prolongement axial du piston de commande (82) et est limité radialement vers l'extérieur par un perçage (78) du boîtier de soupape (48), qui débouche à l'intérieur du siège (76) de cette soupape (44) et est traversé axialement par le poussoir (86).

7. Dispositif à soupapes selon la revendication 6, caractérisé en ce que le siège de soupape (76) possède la forme d'une surface de cône droit possédant un angle d'ouverture égal globalement à 130° ± 10° et que le diamètre $d_2$ de la bille de soupape (79) est trois à quatre fois supérieur au diamètre $d_1$ du perçage central traversant (78) du boîtier de soupape (48), qui délimite sur le côté extérieur le canal d'étranglement (87).

8. Dispositif à soupapes selon la revendication 7, caractérisé en ce que le perçage traversant central (78) se raccorde avec une courbure uniforme à la surface de siège conique (76).

9. Dispositif à soupapes selon l'une des revendications 1 à 8, caractérisé en ce que la course maximale d'ouverture de la bille de soupape (79) est supérieure à l'étendue axiale de la section tubulaire de perçage (88), qui se raccorde au siège de soupape (76) et dans laquelle la bille de soupape (79) est disposée de manière à être déplaçable axialement.

10. Dispositif à soupapes selon la revendication 9, caractérisé en ce que la section tubulaire de boîtier (88), qui forme la limite extérieure de la fente d'étranglement (89), se raccorde avec une courbure uniforme à la limite axiale, située côté soupape, de la chambre (46) de la pression de sortie.

11. Dispositif à soupapes selon l'une des revendications 1 à 10, caractérisé en ce que pour la conversion d'une partie de la force de la pédale appliquée par le conducteur au moyen de la pédale de frein (17) sur un coulisseau (133) déplaçable axialement dans le boîtier (48) de la soupape de frein (28), en la force d'actionnement nécessaire pour l'actionnement de la commande de la pression de freinage et agissant sur le piston d'actionnement (98) de la soupape de frein (28), il est prévu un ressort de transmission (147), qui peut être comprimé axialement sous l'effet du déplacement du coulisseau (133) et qui est accroché à une bride radiale d'appui (146) du piston d'actionnement (98) et peut être supporté par le coulisseau (133), dans la partie centrale de ce dernier, et qu'il est prévu un second ressort de réaction (138), qui entoure coaxialement le ressort de transmission (147) et prend appui d'une part sur le coulisseau (133) et d'autre part sur une surface d'appui (142) solidaire du boîtier, et dont la course élastique correspond au moins à celle du ressort de transmission (147).

12. Dispositif à soupapes selon la revendication 11, caractérisé en ce que le rapport ($C_B/C_R$) de la raideur élastique ($C_B$) du ressort de transmission (147) à la raideur élastique ($C_R$) du ressort de réaction (138) possède une valeur comprise entre 1/6 et 1/12, de préférence une valeur avoisinant 1/10.

13. Dispositif à soupapes selon la revendication 11 ou 12, caractérisé en ce que le ressort de transmission (147) est retenu sur le piston d'actionnement (98), auquel cas une bride d'extrémité radiale (148), qui supporte l'extrémité, située sur la pédale, du ressort de transmission, d'une douille (149) qui est prévue pour retenir le ressort de transmission (147) et est déplaçable axialement par rapport au piston d'actionnement (98), est disposée, dans la position de base du piston correspondant à l'état non actionné de la soupape de frein (28), à une faible distance axiale du coulisseau (133), qui correspond à une fraction comprise entre 1/20 et 1/10 du trajet maximum de déplacement du coulisseau (133).

Fig. 1

Fig. 2

Fig. 3

EP 0 735 962 B1

Fig. 4